# EUROPÄISCHE PATENTSCHRIFT

(11) **EP 0 697 357 B1**
(45) Veröffentlichungstag und Bekanntmachung des Hinweises auf die Patenterteilung: **22.10.1997**
(21) Anmeldenummer: 95110736.6
(22) Anmeldetag: 10.07.1995
(51) Int. Cl.: B65G 65/48

(54) **Mikrodosiergerät**
Micro-metering device
Appareil doseur micrométrique

(30) Priorität: 15.08.1994 CH 2505/94
(43) Veröffentlichungstag der Anmeldung: 21.02.1996
(73) Patentinhaber: BÜHLER AG, 9240 Uzwil (CH)
(72) Erfinder: Näf, Peter, CH-9410 Heiden (CH); Bühler, Christian, CH-9536 Schwarzenbach (CH)

(56) Entgegenhaltungen:
- EP-A- 0 235 125
- EP-A- 0 540 433
- WO-A-91/04933
- WO-A-91/06498
- GB-A- 931 117

## Beschreibung

Die Erfindung betrifft ein Mikrodosiergerät, insbesondere eine Dosierwaage für die kontinuierliche Abgabe von Schüttgütern, welche einen Wägebehälter mit Austraghilfen sowie eine Dosierschnecke aufweist.

Die Erfindung ist vorrangig anwendbar für Schüttgüter wie Mehl, Salz oder Zucker mit bedingungsabhängig unterschiedlichem Fliessverhalten.

Die Aufbereitung von Futter- und Nahrungsmitteln macht es vielfach notwendig, Mischungen mit Anteilen in kleinen Mengen zusammenzumischen oder aber in grössere Chargen Zusätze in geringen Prozentsätzen hinzuzumischen. Dies ist der Fall bei der Herstellung von Tierfuttermischungen oder Gewürzmischungen und Suppen oder bei der Teigwarenherstellung (dosieren von Mehl zu Griess).

In der industriellen Praxis, vor allem bei automatisiertem Betrieb, ist ein störungsfreies Dosieren der Komponenten in genau festgelegten Anteilen erforderlich. Neben speziellen Granulations- und Trocknungsvorgängen ist es möglich, Dosiereinrichtungen so auszubilden, dass Brückenbildungen und Verstopfungen vermieden werden.

Die US-PS-3151782 zeigt eine Einrichtung, bei der der Produktnachschub von einem Vorbehälter und die Bewegung einer Dosierschnecke mittels eines gemeinsamen Antriebes erfolgen. Durch eine Rüttelbewegung wird der Produktnachschub aus dem Vorbehälter erzeugt, wobei eine Abdeckplatte über der Bodenöffnung ein Durchlaufen des Produktes verhindert. Stoffe, die zum Zusammenbacken bei Vibrationen neigen (z. B. Nahrungs- und Futtermittel), finden hier keine Dosierhilfe. Vielmehr wird durch die Vibrationen die Betriebssicherheit beeinflusst.

Eine weitere, gattungsgemässe Dosiervorrichtung ist in der GB-A-931117 beschrieben.

Des weiteren ist aus der EP-B-451225 eine Dosiervorrichtung bekannt, die als Dosierwaage für die kontinuierliche Abgabe von Schüttgut ausgebildet ist. Sie beinhaltet einen Behälter als Wägebehälter mit Austragshilfen und eine Dosierschnecke, wobei die Austragshilfen und die Dosierschnecke ebenfalls von einem gemeinsamen Antrieb angetrieben werden. Die Dosiervorrichtung ist an Wägeelementen abgestützt und ist als Differenzialwaage ausgebildet. Auch in dieser Ausbildung können Brückenbildungen des Produktes nicht ausgeschlossen werden und der gemeinsame Antrieb erweist sich als zu aufwendig.

Der Erfindung wurde nun die Aufgabe gestellt, eine gattungsgemässe Dosiereinrichtung so weiter zu entwickeln, dass die Betriebssicherheit erhöht und der Aufbau, bei exakter Arbeitsweise vereinfacht wird und eine Eignung besonders in automatischen Anlagen sowohl für leichtfliessende als auch mittel- und schwerfliessende Schüttgüter gegeben ist.

Diese Aufgabe wird mit den kennzeichnenden Merkmalen des Anspruchs 1 gelöst. Die Flachbodenbauweise gestattet eine optimale Bauform des Wägebehälters, wie bereits der EP-B-451225 zu entnehmen ist. Er ist bevorzugt als einfacher, senkrecht stehender Zylinder ausgebildet. Gemäss dieser EP-B-451225 erfolgt die Produktübergabe in den Einzugsbereich einer Dosierschnecke durch eine seitliche Öffnung.

Es Zeigte sich jedoch, dass es günstiger ist, die Produktübergabeöffnung nicht seitlich, sondern direkt im Boden und über der Dosierschnecke und mit kurzem Fallweg anzuordnen. Die Dosierschnecke kann das Produkt noch konstanter übernehmen. Es entstehen keinerlei Verdichtungen oder Pressungen des Produktes. Zwar ist eine solche direkte Übergabe des Produkts in den Einzugsbereich der Dosierschnecke prinzipiell gemäss EP-A-540433 bekannt, jedoch ohne einen Entlastungsboden.

Der zwischen oberem und unterem Räumer angeordnete Entlastungsboden weist lediglich einen schmalen Schlitz für die Produktübergabe auf.

Der Entlastungsboden gestattet es, bei gleichen Schüttgewichten Produktdruckdifferenzen auszugleichen.

Der als solcher bekannte horizontale Räumer zeigt keine negativen Auswirkungen auf das Wägeresultat.

Die Erfindung betrifft ferner weitere vorteilhafte Ausgestaltungen.

Zweckmässig wird der obere Räumer einflüglig und der untere vierflüglig ausgebildet, was mit der geringsten Elementezahl einen gleichmässigen Produktnachfluss aus dem Behälter und zur Dosierschnecke ermöglicht.

Räumer und Dosierschnecke sind mit separaten Antrieben versehen, was Übertriebe vermeidet und die Funktionssicherheit sowie die Varianz der Arbeitsparameter erhöht.

Wie in der EP-B-451225 beschrieben, kann eine Dosiergruppe aus mehreren Dosierwaagen und einer Sammelwaage gebildet werden und sowohl die Sammelwaage als auch die Dosierwaagen können als Differenzialwaage ausgebildet sein.

Die Erfindung wird nachfolgend in einem Ausführungsbeispiel an Hand einer Zeichnung näher beschrieben. In der Zeichnung zeigen die:

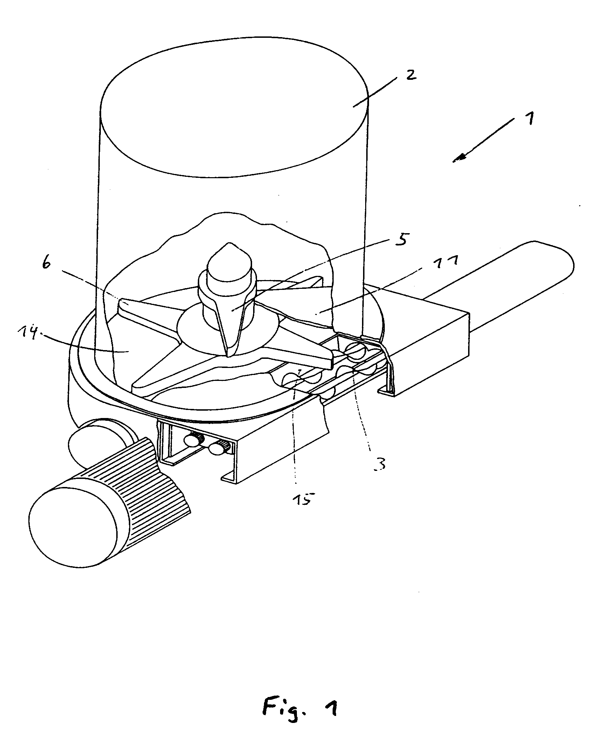

- Fig. 1:: eine perspektivische Darstellung des Mikrodosiergerätes

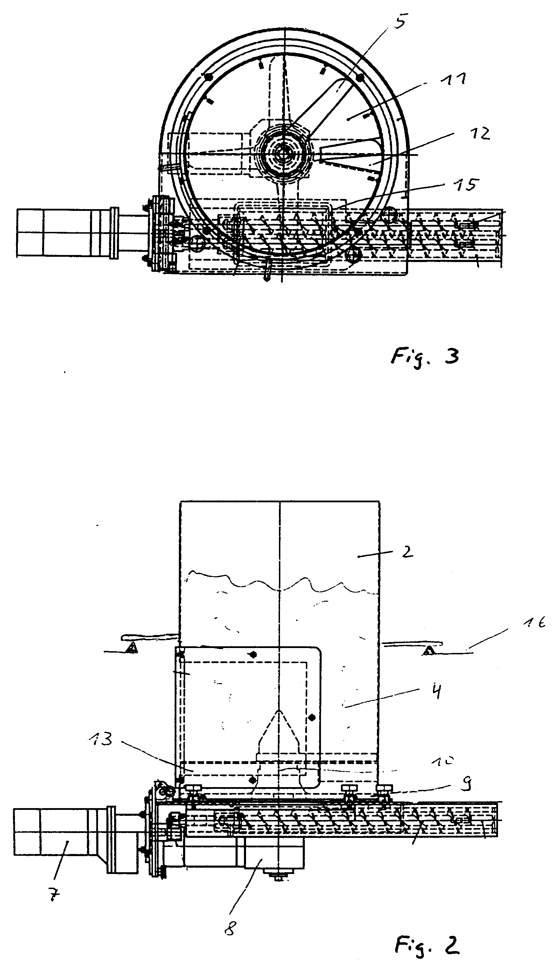

- Fig. 2:: eine Seitenansicht des Mikrodosiergerätes
- Fig. 3:: eine Draufsicht gemäss Figur 2

Das erfindungsgemässe Mikrodosiergerät ist als Dosierwaage 1 ausgebildet. Diese besteht aus einem Wägebehälter 2 mit Austraghilfen und einer Dosierschnecke 3. Das Gut 4 wird über einen nicht dargestellten Einlaufstutzen, gemäss EP-B-451225, der durch einen, nicht dargestellten Schieber verschliessbar ist, von oben in den Wägebehälter 2 eingespeist. Über eine, ebenfalls nicht dargestellte Luftschleuse gemäss EP-B-451225 kann Raumluft über eine mit Klappen verschliessbare Öffnung zugeführt oder bei geschlossener Klappe während des Befüllens des Wägebehälters 2 staubhaltige Luft aspiriert werden.

Eine, die Dosierschnecke 3 und die Antriebe 7, 8 aufnehmende Einheit ist mittels Befestigungsflansch 9 mit dem Wägebehälter 2 verbunden (Verschraubung oder Schnellverschluss). Die Austraghilfe besteht aus einem einflügligen, oberen Räumer 5, der vom Motor 8 über eine senkrechte Achse 10 angetrieben ist. Der Räumer 5 bewegt sich mit geringem Abstand unmittelbar über einem Entlastungsboden 11, der im wesentlichen horizontal angeordnet ist. Der Entlastungsboden 11 weist eine Produktdurchfallöffnung 12 in Form eines Schlitzes auf. Der Räumer 5 fördert das Gut 4 in einen Raum 13 (Vordosierung) zwischen dem Entlastungsboden 11 und einem Boden 14. Über dem Boden 14 sorgt ein vierflügliger Räumer 6 für den Austrag des Gutes 4 in den Einzugsbereich der Dosierschnecke 3 mit einem Fallweg von lediglich ca. 10 mm. Hierzu ist eine Produktübergabeöffnung 15 vorgesehen. Durch eine vertikal versetzte Anordung der Öffungen 12, 15 wird der Einzugsbereich der Dosierschnecke 3 vom Auflagegewicht des Gutes 4 im Wägebehälter 2 entlastet.

Der obere Räumer 5 hat Misch- und Austraghilfsfunktion. Das Austragen des Gutes 4 in den Einzugsbereich der Dosierschnecke 3 erfolgt durch den Räumer 6. Vom Einzugsbereich ab wird das Gut 4 erst durch die Dosierschnecke 3 in der erforderlichen Menge einer Abgabestelle zudosiert, was bevorzugt im freien Fall erfolgt.

Zur Variation der Dosierleistung sind die Drehzahlen der Antriebe 7, 8 einstellbar.

Die Dosierwaage ist als Einheit an Wägeelementen 16, an einem nicht dargestellten Gestell o. dgl. aufgehängt bzw. abgestützt und funktioniert als Differenzialwaage, wie in der EP-B-451225 beschrieben.

### Kurzzeichen

- 1: Dosierwaage
- 2: Wägebehälter
- 3: Dosierschnecke
- 4: Gut
- 5: Räumer
- 6: Räumer
- 7: Antrieb
- 8: Antrieb
- 9: Befestigungsflansch
- 10: Achse
- 11: Entlastungsboden
- 12: Produktdurchfallöffnung
- 13: Raum
- 14: Boden
- 15: Produktübergabeöffnung
- 16: Wägeelement

## Patentansprüche

1. Mikrodosiergerät, insbesondere Dosierwaage Zur kontinuierlichen Abgabe Von Schüttgütern, welche einen Wägebehälter (2) mit Austraghilfen und eine Dosierschnecke (3) aufweist, wobei der Wägebehälter (2) einen zumindest teilweise flachen Boden (14), einen Entlastungsboden (11) und eine druckentlastete Produktübergabeöffnung (15) zur Dosierschnecke (3) enthält und oberhalb des Bodens (14) bzw. Entlastungsbodens (11) je ein Räumer (5, 6) angeordnet ist und weiterhin der Wägebehälter (2) an Wägeelementen (16) aufgehängt ist und mit einer Luftschleuse versehen ist, und der Entlastungsboden (11) mit einer schlitzförmigen Produktdurchfallöffnung (12) versehen ist, dadurch gekennzeichnet, dass die Produktübergabeöffnung (15) direkt über einem Einzugsbereich der Dosierschnecke (3) angeordnet ist, wobei der Fallweg des Schüttgutes ca. 10 mm beträgt.

2. Mikrodosiergerät nach Anspruch 1, dadurch gekennzeichnet, dass die Austraghilfen und die Dosierschnecke (3) mit separaten Antrieben (7, 8) versehen sind.

3. Mikrodosiergerät nach Anspruch 1 und 2, dadurch gekennzeichnet, dass der obere Räumer (5) einflüglig und der untere Räumer (6) vierflüglig ausgebildet ist.

## Claims

1. Micro-metering device, in particular metering balance for the continuous delivery of bulk materials, which comprises a weighing container (2) with discharge aids and a metering screw (3), wherein the weighing container (2) contains a base (14) which is at least partially flat, a release base (11) and a pressure-released product transfer orifice (15) to the metering screw (3) and a respective reamer (5, 6) is arranged above the base (14) or release base (11) and, furthermore, the weighing container (2) is suspended on weighing elements (16) and is provided with an air lock, and the release base (11) is provided with a slot-shaped product transmitting orifice (12), characterised in that the product transfer orifice (15) is arranged directly above an intake region of the metering screw (3), wherein the falling path of the bulk material is about 10 mm.

2. Micro-metering device according to claim 1, characterised in that the discharge aids and the metering screw (3) are provided with separate drives (7, 8).

3. Micro-metering device according to claims 1 and 2, characterised in that the upper reamer (5) is designed with one vane and the lower reamer (6) with four vanes.

## Revendications

1. Appareil de dosage micrométrique, notamment doseuse pondérale permettant de délivrer des matières en vrac d'une manière continue, qui comprend une trémie peseuse (2), comportant des auxiliaires d'évacuation (3), et une vis sans fin de dosage (3), la trémie peseuse (2) comportant un fond (14) au moins partiellement plat, un fond de soulagement (11) et une ouverture (15), soulagée en pression, de transfert de produit à la vis sans fin de dosage (3), des organes d'arasement (5, 6) respectifs étant disposés un chacun au-dessus du fond (14) et du fond de soulagement (11), tandis qu'en outre, la trémie doseuse (2) est suspendue à des éléments de pesage (16) et est pourvue d'une écluse d'air et que le fond de soulagement (11) comporte une ouverture de passage de produit (12) en forme de fente, caractérisé en ce que l'ouverture de transfert de produit (15) est disposée directement au-dessus d'une zone d'introduction de la vis sans fin de dosage (3), la distance de chute de la matière en vrac étant égale à 10 mm environ.

2. Appareil de dosage micrométrique suivant la revendication 1, caractérisé en ce que les auxiliaires d'évacuation et la vis sans fin de dosage (3) sont pourvus d'entraînements (7, 8) séparés.

3. Appareil de dosage micrométrique suivant la revendication 1 ou 2, caractérisé en ce que l'organe supérieur d'arasement (5) comporte une aile et l'organe inférieur d'arasement (6) comporte quatre ailes.
